(19) Europäisches Patentamt
European Patent Office
Office européen des brevets

(11) Veröffentlichungsnummer: **0 316 779**
**A2**

# (12) EUROPÄISCHE PATENTANMELDUNG

(21) Anmeldenummer: **88118778.5**

(51) Int. Cl.4: **C09B 62/008 , D06P 1/38**

(22) Anmeldetag: **11.11.88**

Patentansprüche für folgenden Vertragsstaat: ES.

(30) Priorität: **20.11.87 DE 3739349**

(43) Veröffentlichungstag der Anmeldung:
**24.05.89 Patentblatt 89/21**

(84) Benannte Vertragsstaaten:
**BE CH DE ES FR GB IT LI**

(71) Anmelder: **HOECHST AKTIENGESELLSCHAFT**
**Postfach 80 03 20**
**D-6230 Frankfurt am Main 80(DE)**

(72) Erfinder: **Tappe, Horst, Dr.**
**Ringstrasse 9**
**D-6057 Dietzenbach(DE)**
Erfinder: **Oehme, Dieter**
**Potsdamer Strasse 18**
**D-6093 Flörsheim am Main(DE)**
Erfinder: **Russ, Werner Hubert, Dr.**
**Berliner Strasse 10**
**D-6238 Hofheim am Taunus(DE)**

## (54) Pyridon-Azoverbindungen, Verfahren zu ihrer Herstellung und ihre Verwendung als Farbstoffe.

(57) Monoazoverbindung entsprechend der nachstehend angegebenen und definierten allgemeinen Formel (1), die sehr gute faserreaktive Farbstoffeigenschaften besitzen und hydroxy- und/oder carbonamidgruppenhaltiges Material, insbesondere Fasermaterial, wie Wolle und insbesondere Cellulosefasern, in farbstarken, echten Tönen färben.

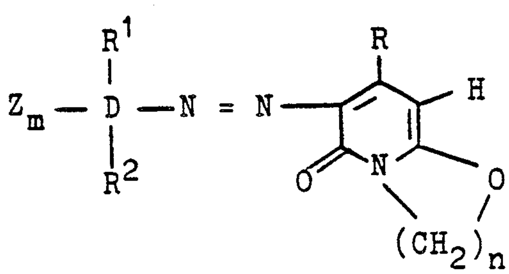

(1)

in welcher bedeuten:
D ist ein Benzol- oder ein Naphthalinring oder ein heterocyclischer Rest;
$R^1$ und $R^2$ sind, unabhängig voneinander, jedes Wasserstoff, Alkyl von 1 bis 4 C-Atomen, Alkoxy von 1 bis 4 C-Atomen, Halogen, Carboxy oder Sulfo;
Z ist eine faserreaktive Gruppierung, die an D direkt oder über ein Brückenglied an D gebunden ist;
m steht für die Zahl 1 oder 2, bevorzugt 1;
R ist Alkyl von 1 bis 4 C-Atomen, das substituiert sein kann, wie beispielsweise durch Halogen, wie Brom und insbesondere Chlor, Hydroxy, Cyano, Sulfo, Carboxy, Sulfato oder Phosphato, oder ist Phenyl, das substituiert sein kann, wie beispielsweise durch 1 oder 2 Substituenten aus der Gruppe Methyl, Ethyl, Methoxy, Ethoxy, Chlor, Sulfo und Carboxy, oder ist Carboxy, Carbamoyl oder Carbalkoxy von 2 bis 5 C-Atomen;
n steht für die Zahl 2 oder 3.

EP 0 316 779 A2

# Pyridon-Azoverbindungen, Verfahren zu ihrer Herstellung und ihre Verwendung als Farbstoffe

**Pyridon-Azoverbindungen, Verfahren zu ihrer Herstellung und ihre Verwendung als Farbstoffe**

Die Erfindung liegt auf dem technischen Gebiet der faserreaktiven Farbstoffe.

Fasserreaktive, wasserlösliche Azoverbindungen mit Farbstoffeigenschaften, die eine 2-Hydroxy-pyridon-Kupplungskomponente besitzen, sind in der Literatur bereits beschrieben, wie beispielsweise in der US-Patentschrift 4 504 273, in den europäischen Patentanmeldungs-Veröffentlichungen Nrs. 0 080 352A, 0 078 024A und 0 107 614A und in den britischen Patentschriften Nrs. 1 271 226 und 2 010 882. Die in diesen Schriften durch Beispiele beschriebenen Azofarbstoffe sind aus heutiger Sicht für eine technische Verwertung mit Nachteilen behaftet, sei es durch ihren Molekülaufbau, der eine aufwendige Synthese erfordert, oder sei es wegen nicht mehr den heutigen Anforderungen genügender Eigenschaften. Des weiteren sind faserreaktive Azoverbindungen mit einer 2-Hydroxy-pyridon-Kupplungskomponente aus der europäischen Patentanmeldungs-Veröffentlichung Nr. 0 181 585A und der US-PS 4 659 807 bekannt.

Mit der vorliegenden Erfindung wurden nunmehr neue, wertvolle Monoazoverbindungen gefunden, die der allgemeinen Formel (1)

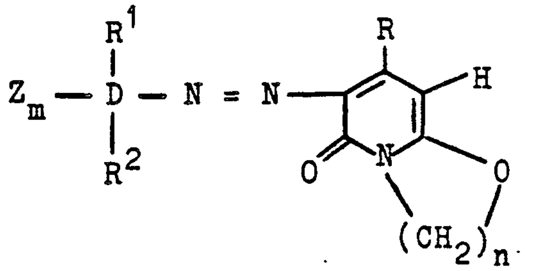

(1)

entsprechen, in welcher bedeuten:

D ist ein Benzol- oder ein Naphthalinring oder ist ein heterocyclischer Rest, wie der Benzthiazol-2-yl-Rest, bei dem die Substituenten Z, $R^1$ und $R^2$ an den carbocyclischen Teil gebunden sind;

$R^1$ und $R^2$ sind, unabhängig voneinander, jedes Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Fluor und insbesondere Brom und Chlor, Carboxy oder Sulfo;

Z ist eine faserreaktive Gruppierung, die direkt an D oder über ein Brückenglied, wie einen gegebenenfalls substituierten Benzol- oder Naphthalinring oder eine gegebenenfalls substituierte Phenylamino- oder Benzoylaminogruppe oder eine Alkylengruppe von 1 bis 4 C-Atomen, an D gebunden ist;

m steht für die Zahl 1 oder 2, bevorzugt 1;

R ist eine Alkylgruppe von 1 bis 4 C-Atomen, die substituiert sein kann, wie beispielsweise durch Halogen, wie Brom und insbesondere Chlor, Hydroxy, Cyano, Sulfo, Carboxy, Sulfato oder Phosphato, oder ist Phenyl, das substituiert sein kann, wie beispielsweise durch 1 oder 2 Substituenten aus der Gruppe Methyl, Ethyl, Methoxy, Ethoxy, Chlor, Sulfo und Carboxy, oder ist Carboxy, Carbamoyl oder Carbalkoxy von 2 bis 5 C-Atomen, bevorzugt jedoch Alkyl von 1 bis 4 C-Atomen;

n steht für die Zahl 2 oder 3, bevorzugt 3.

Unsubstituierte oder substituierte Alkylgruppen, die für den Formelrest R stehen, sind insbesondere die Methyl- und Ethylgruppe sowie die β-Chlorethyl-, β-Hydroxyethyl-, β-Cyanoethyl- und die Sulfomethyl-Gruppe.

Faserreaktive Gruppen Z sind solche, die in der Literatur zahlreich beschrieben sind und sowohl den Reaktivresten der aliphatischen als auch der heterocyclischen Reihe angehören. Reaktivreste der aliphatischen Reihe sind insbesondere die, die sich von den Gruppen der Vinylsulfonreihe ableiten, wie beispielsweise von Gruppen entsprechend der allgemeinen Formel (2)

$X{-}SO_2{-}A{-}$ (2)

in welcher

X die Vinylgruppe bedeutet oder eine Ethylgruppe ist, die in β-Stellung durch einen unter Bildung der Vinylgruppe alkalisch eliminierbaren Substituenten substituiert ist, wie beispielsweise eine β-Chloroethyl-, β-Acetyloxy-, β-Thiosulfatoethyl-, β-Phosphatoethyl- und insbesondere β-Sulfatoethyl-Gruppe, und

A eine direkte Bindung oder eine Methylen- oder Ethylengruppe oder eine Aminogruppe der Formel (2a)

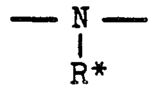

(2a)

ist, in welcher
R* für Wasserstoff oder Alkyl von 1 bis 4 C-Atomen, wie Ethyl und insbesondere Methyl, steht.

Faserreaktive Reaktivgruppen aus der aliphatischen Reihe sind weiterhin beispielsweise die β-Brom-acryloylamino-, α,β-Dibrom-propionylamino-, β-(Phenylsulfonyl)-propionylamino, β-(Methylsulfonyl)-propionylamino-, β-Chlorpropionylamino-, 2,2,3,3-Tetrafluor-cyclobutan-1-carbonylamino-, N-(β-Sulfatoethylsulfonyl)-N-methyl- oder -N-ethyl-amino- und die N-(Vinylsulfonyl)-N-methyl- oder -N-ethyl-amino-Gruppe.

Faserreaktive heterocyclische Gruppen sind beispielsweise solche, die in der deutschen Offenlegungsschrift Nr. 3 503 746 auf den Seiten 9 bis 16 beschrieben sind und mittels einer Aminogruppe der oben genannten und definierten Formel (2a) direkt an D oder zusätzlich über ein Brückenglied an D gebunden sind. Insbesondere bevorzugt hiervon sind diejenigen heterocyclischen Reaktivreste, die durch Halogen substituiert sind, wie beispielsweise die 2,6-Difluor-5-chlor-pyrimidin-4-yl-amino-, 2-Fluor-5-chlorpyrimidin-4-yl-amino-, 2-Fluor-5-chlor-6-methyl-pyrimidin-4-yl-amino-, 2-Fluor-5,6-dichlor-pyrimidin-4-yl-amino, 6-Fluor-2,5-dichlorpyrimidin-4-yl-amino-Gruppen und insbesondere die Halogen-triazin-Derivate entsprechend einer allgemeinen Formel (3)

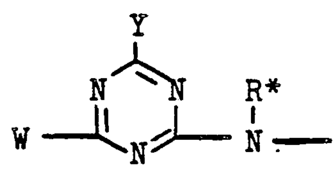

(3)

in welcher
R* die obengenannte Bedeutung besitzt,
Y für ein Fluor- oder Chloratom steht und
W ein Fluor- oder Chloratom ist oder einen N-Nicotinsäureamid- oder N-Nicotinsäure-Rest oder eine Aminogruppe der allgemeinen Formel (4)

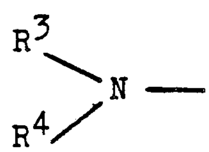

(4)

bedeutet, in welcher
$R^3$ ein Wasserstoffatom oder eine Alkylgruppe von 1 bis 4 C-Atomen, wie die Ethyl- oder Methylgruppe, ist, die substituiert sein kann, wie beispielsweise durch 1 oder 2 Substituenten aus der Gruppe Sulfo, Carboxy, Phosphato, Sulfato, Hydroxy, Cyano, Vinylsulfonyl, β-Sulfatoethylsulfonyl, β-Chloroethylsulfonyl oder gegebenenfalls substituiertes Aryl, wie ein durch 1, 2 oder 3, bevorzugt 1 oder 2, Substituenten aus der Gruppe Sulfo, Carboxy, Methyl, Ethyl, Methoxy, Ethoxy, Chlor, Brom und eine Gruppe der Formel $-SO_2-X$ mit X einer der oben angegebenen Bedeutungen substituiertes Phenyl oder Naphthyl, oder
$R^3$ ein cycloaliphatischer Rest ist, wie beispielsweise der Cyclohexylrest, und
$R^4$ ein Wasserstoffatom oder eine Alkylgruppe von 1 bis 4 C-Atomen, wie die Ethyl- oder Methylgruppe, ist, die substituiert sein kann, wie beispielsweise durch 1 oder 2 Substituenten aus der Gruppe Sulfo, Carboxy, Phosphato, Sulfato, Hydroxy, Cyano, Vinylsulfonyl, β-Sulfatoethylsulfonyl, β-Chlorethylsulfonyl oder gegebenenfalls substituiertes Aryl, wie ein durch 1, 2 oder 3, bevorzugt 1 oder 2, Substituenten aus der Gruppe Sulfo, Carboxy, Methyl, Ethyl, Methoxy, Ethoxy, Chlor, Brom und eine Gruppe der Formel $-SO_2-X$ mit X einer der oben angegebenen Bedeutungen substituiertes Phenyl oder Naphthyl, oder
$R^4$ ein gegebenenfalls substituierter Arylrest ist, wie ein gegebenenfalls durch 1, 2 oder 3, bevorzugt 1 oder 2, Substituenten aus der Gruppe Sulfo, Carboxy, Chlor, Brom, Methyl, Ethyl, Methoxy, Ethoxy und eine Gruppe der Formel $-SO_2-X$ mit X einer der obengenannten Bedeutungen substituiertes Phenyl oder Naphthyl, oder
$R^3$ und $R^4$ zusammen mit dem Stickstoffatom den Rest eines 5- oder 6-gliedrigen heterocyclischen Restes

bilden, wie beispielsweise den Piperidino-, Piperazino- oder Morpholino-Rest.

Reste entsprechend der allgemeinen Formel (4) sind beispielsweise die Aminogruppe, die β-(Sulfoethyl)-amino-, N-Methyl-N-(β-sulfoethyl)-amino- oder N,N-Bis-[β-(β′-chlorethylsulfonyl)-ethyl]-amino-Gruppe oder eine Phenylaminogruppe, die im Benzolkern durch 1 oder 2 Substituenten aus der Gruppe Methyl, Ethyl, Methoxy, Ethoxy, Chlor, Brom und Sulfo und/oder am N-Atom durch die Methyl- oder Ethylgruppe substituiert sein kann, oder eine Phenylaminogruppe, die am N-Atom durch eine Methyl- oder Ethylgruppe substituiert sein kann und deren Phenylrest durch eine β-Sulfatoethylsulfonyl-, Vinylsulfonyl- oder β-Phosphatoethylsulfonyl-Gruppe substituiert ist und zusätzlich durch Methyl, Ethyl, Methoxy, Ethoxy, Chlor, Brom oder Sulfo substituiert sein kann.

Weitere bevorzugte faserreaktive halogensubstituierte heterocyclische Reste Z sind solche der allgemeinen Formel (5)

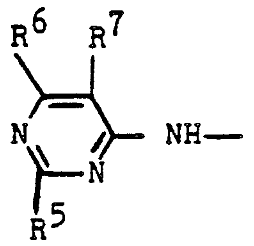

(5)

in welcher
$R^5$ für Chlor, Fluor oder Methylsulfonyl steht,
$R^6$ Chlor, Fluor oder Methyl ist und
$R^7$ Chlor oder Cyano bedeutet.

Im vorstehenden und nachfolgenden Text bedeuten Sulfogruppen Gruppen entsprechend der allgemeinen Formel $-SO_3M$, Carboxygruppen Gruppen entsprechend der allgemeinen Formel -COOM, Sulfatogruppen Gruppen entsprechend der allgemeinen Formel $-OSO_3M$, Thiosulfatogruppen Gruppen entsprechend der allgemeinen Formel $-S-SO_3M$ und Phosphatogruppen Gruppen entsprechend der allgemeinen Formel $-OPO_3M_2$, in welchen
M für ein Wasserstoffatom oder ein Alkalimetall, wie Natrium, Kalium und Lithium, oder für ein salzbildendes 2- oder 3-wertiges Metall steht.

Von den erfindungsgemäßen Azoverbindungen der allgemeinen Formel (1) sind diejenigen hervorzuheben, in welchen R die Methylgruppe bedeutet und n für die Zahl 3 steht, desweiteren solche Azoverbindungen, in welchen R und n die obengenannten, insbesondere die eben genannten bevorzugten Bedeutungen haben, m für die Zahl 1 steht und Z eine Gruppe der allgemeinen Formel $X-SO_2-$ mit X einer der obengenannten, insbesondere bevorzugten Bedeutung besitzt und D den Benzolring bedeutet, desweiteren solche entsprechend der allgemeinen Formel (1), in welchen R und n die obengenannten, insbesondere die eben genannten bevorzugten Bedeutungen haben, D den Naphthalinring darstellt, der in 2-Stellung mit der Azogruppe verbunden ist, m für die Zahl 1 oder 2, bevorzugt 1 steht und Z eine faserreaktive Gruppe der allgemeinen Formel $X-SO_2-$ mit X der obengenannten, insbesondere bevorzugten Bedeutung ist, und $R^1$ und $R^2$ die obengenannten Bedeutungen besitzen, bevorzugt $R^1$ jedoch ein Wasserstoffatom und $R^2$ ein Wasserstoffatom oder eine Sulfogruppe ist.

Die vorliegende Erfindung betrifft weiterhin Verfahren zur Herstellung der erfindungsgemäßen Verbindungen der allgemeinen Formel (1). Sie sind beispielsweise dadurch gekennzeichnet, daß man die Diazoniumverbindung einer Aminoverbindung der allgemeinen Formel (6)

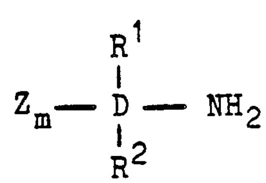

(6)

mit Z, m, D, $R^1$ und $R^2$ der obengenannten Bedeutung, mit einer Verbindung der allgemeinen Formel (7)

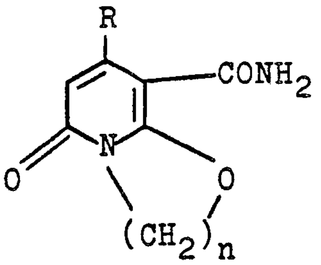

(7)

in welcher R und n die obengenannten Bedeutungen haben, unter gleichzeitigem Austritt der Carbamoylgruppe kuppelt.

Verbindungen der allgemeinen Formel (1), deren faserreaktiver Rest Z mit dessen Aminogruppe -N(R*)- an D gebunden ist, insbesondere ein heterocyclischer, halogensubstituierter faserreaktiver Rest Z, können erfindungsgemäß auch in der Weise hergestellt werden, daß man eine Amino-Azoverbindung der allgemeinen Formel (8)

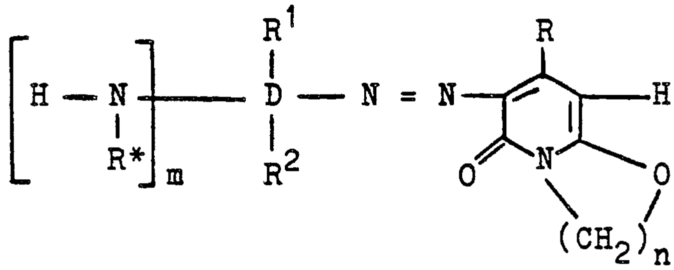

(8)

in welcher D, $R^1$, $R^2$, R, R*, m und n die obengenannten Bedeutungen haben, wobei m insbesondere bevorzugt 1 ist, mit einer Verbindung der allgemeinen Formel (9)

$Z'—Y^1$ (9)

in welcher Z' ein von der Gruppierung -N(R*)- freier Rest Z obengenannter Bedeutung ist und $Y^1$ einen als Anion abspaltbaren Substituenten, wie insbesondere ein Halogenatom, wie Fluor oder Chloratom, bedeutet, in äquivalenter Menge umsetzt.

Die Reaktionsbedingungen der erfindungsgemäßen Verfahrensweisen sind analog bekannten Verfahrensweisen der Diazotierung und Kupplung bzw. der Acylierung von Aminoverbindungen mit Acylierungsmitteln, wie beispielsweise solchen mit reaktiven Halogenatomen, wie Fluor- oder Chloratomen, wie ein oder zwei reaktive Halogenatome enthaltende Heterocyclen oder Verbindungen mit Carbonsäurechlorid- oder Sulfonsäurechloridgruppen.

So führt man beispielsweise die Diazotierung des Amins der allgemeinen Formel (6) zum Diazoniumsalz in wäßrigem Medium mittels einen üblichen Nitrosierungsagenz, wie salpetrige Säure, bei einer Temperatur zwischen -5° C und +20° C und einem pH-Wert von 2 oder kleiner als 2 durch; die Kupplungsreaktion kann beispielsweise in wäßrigem Medium bei einer Temperatur zwischen 5 und 25° C und einem pH-Wert zwischen 2 und 8, bevorzugt zwischen 5 und 7, ausgeführt werden.

Die erfindungsgemäße Umsetzung einer Amino-Azoverbindung der allgemeinen Formel (8) mit einem Acylierungsmittel kann in wäßrigem oder in wäßrig-organischem Medium (wobei der organische Lösemittelanteil ein unter den Reaktionsbedingungen inertes, bevorzugt wasserlösliches Lösemittel ist, wie beispielsweise Aceton, Dimethylformamid und Dimethylsulfoxid) bei einem pH-Wert zwischen 1 und 8, bevorzugt zwischen 4 und 6, und bei einer Temperatur zwischen -20° C und +80° C, bevorzugt zwischen 20 und 60° C, ausgeführt werden.

Die Ausgangsverbindungen der allgemeinen Formel (8) lassen sich analog bekannten Verfahrensweisen leicht durch Kupplung des diazotierten Amins der allgemeinen Formel (10)

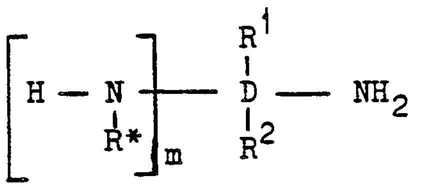

(10)

in welchen D, $R^1$, $R^2$, $R^*$ und m die obengenannten Bedeutungen haben, wobei m insbesondere bevorzugt die Zahl 1 ist, mit einer Kupplungskomponente der oben genannten und definierten allgemeinen Formel (7) unter Austritt der Carbamoylgruppe herstellen. Die Aminoverbindungen der allgemeinen Formel (10) sind allgemein bekannt und zahlreich in der Literatur beschrieben. Ebenso sind die den faserreaktiven Rest Z enthaltenden Ausgangs-Aminoverbindungen der allgemeinen Formel (6) bekannt oder können analog den bekannten. Verbindungen durch Umsetzung der entsprechenden Diaminoverbindung der allgemeinen Formel (10) der obengenannten Bedeutung mit einer Verbindung der oben genannten und definierten allgemeinen Formel (9) in der dem Fachmann bekannten und geläufigen Weise hergestellt werden. Solche Verfahrensweisen sind allgemein in der Literatur oder in Patentveröffentlichungen beschrieben, wie beispielsweise in den Europäischen Patentanmeldungs-Veröffentlichungen Nrs. 0 078 009A und 0 212 264A oder gemäß den Beispielen der obengenannten deutschen Offenlegungsschrift 3 503 746.

Die erfindungsgemäß als Ausgangsverbindung dienende Kupplungskomponente der allgemeinen Formel (7) mit R gleich der Methylgruppe und n gleich der Zahl 2 ist bekannt [s. Chem. Ind. (London), 1981, 29-31]. Andere Ausgangsverbindungen der allgemeinen Formel (7) lassen sich analog den dort angegebenen Verfahrensbedingungen herstellen. So geht man von Pyridonverbindungen der allgemeinen Formel (13)

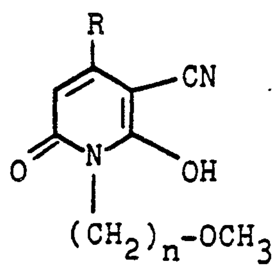

(13)

mit R und n der obengenannten Bedeutung aus (welche wiederum gemäß den Angaben der deutschen Offenlegungsschrift 3 239 436 hergestellt werden können) und hydrolysiert deren Cyangruppe in 95-98%iger wäßriger Schwefelsäure bei einer Temperatur zwischen 50 und 100 °C zur Carbamoylgruppe und gleichzeitiger Ringbildung des zweiten, ankondensierten heterocyclischen Restes. Die erhaltene Verbindung der allgemeinen Formel (7) kann anschließend aus der schwefelsauren Lösung durch Ausfällen auf ein Eis/Wasser-Gemisch und Filtration isoliert werden.

Eine Verfahrensvariante zur Herstellung von erfindungsgemäßen Verbindungen der allgemeinen Formel (1), in welcher Z für einen Rest der allgemeinen Formel (3) steht und m insbesondere 1 bedeutet, ist mit der oben erwähnten Verfahrensweise verbunden, nach welcher solch eine Azoverbindung durch Umsetzung einer Ausgangs-Aminoazoverbindung der allgemeinen Formel (8) mit einer Verbindung der allgemeinen Formel (9), in welcher $Z'$ hier einen Rest der allgemeinen Formel (11)

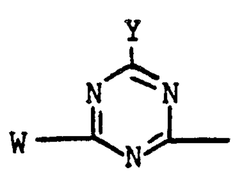

(11)

mit W and Y der obengenannten Bedeutung bedeutet, hergestellt wird. Diese Verfahrensvariante ist dadurch gekennzeichnet, daß man - analog bekannten Verfahrensweisen der Umsetzung von Dihalogen-triazin-Verbindungen mit einer Aminoverbindung - eine Verbindung der allgemeinen Formel (12)

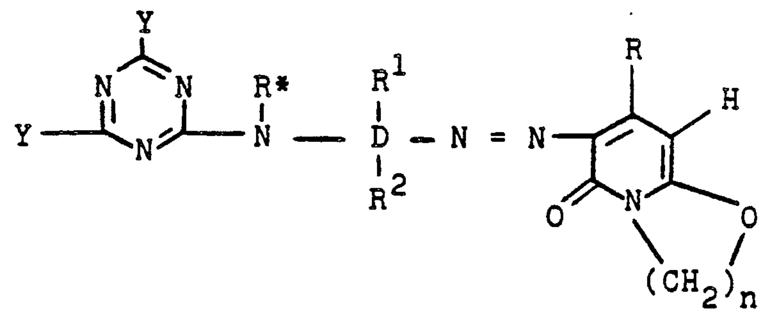

(12)

in welcher R*, $R^1$, $R^2$, R, D und n sowie die beiden Y die obengenannten Bedeutungen haben, mit einer Aminoverbindung der allgemeinen Formel $HNR^3R^4$ mit $R^3$ und $R^4$ der oben genannten Bedeutung umsetzt.

Die Ausgangsverbindungen der allgemeinen Formel (12) selbst erhält man - analog den obigen Angaben der Umsetzung einer Verbindung (8) mit einer Verbindung (9) - durch Umsetzung einer Verbindung der allgemeinen Formel (8) mit einem Trihalogen-s-triazin, wie beispielsweise Cyanurfluorid (2,4,6-Trifluor-1,3,5-triazin) oder Cyanurchlorid (2,4,6-Trichlor-1,3,5-triazin). Solche Verfahrensweisen und die hierfür angewendeten Reaktionsbedingungen sind zahlreich in der Literatur beschrieben (s. bspw. die oben erwähnten europäischen Patentanmeldungs-Veröffentlichungen Nrs. 0 078 009 A und 0 212 264 A). So kann die erfindungsgemäße Umsetzung zu erfindungsgemäßen Verbindungen der allgemeinen Formel (1), in welchen Z für einen Dihalogen-triazinyl-amino-Rest steht, bevorzugt bei einer Temperatur zwischen -10° C und +40° C, vorzugsweise zwischen 0° C und 30° C, sowie bei einem pH-Wert zwischen 1,0 und 7,0, bevorzugt zwischen 3,5 und 5, erfolgen, wobei die Umsetzung in wäßrigem oder wäßrig-organischem Medium der obengenannten Art ausgeführt werden kann. Ebenso kann die erfindungsgemäße Umsetzung einer Verbindung der allgemeinen Formel (1) mit dem für Z stehenden Dihalogen-triazinylamino-Rest zu einer weiteren erfindungsgemäßen Verbindung der allgemeinen Formel (1), in welcher Z einen Rest der allgemeinen Formel (3) mit W gleich einer Amingruppe $R^4R^3N$- bedeutet, mit einer Aminoverbindung der allgemeinen Formel $HNR^3R^4$ analog den Angaben des Standes der Technik bei einer Temperatur zwischen 10 und 60° C, bevorzugt zwischen 20 und 50° C, und bei einem pH-Wert zwischen 2 und 8, bevorzugt zwischen 5 und 7, und in einem wäßrigen oder wäßrig-organischen Medium der oben beschriebenen Art durchgeführt werden kann.

Von der erfindungsgemäß eingesetzten Kupplungskomponenten der allgemeinen Formel (7) sind insbesondere diejenigen hervorzuheben, deren Reste gemäß Formel (7) folgende Bedeutungen haben:
R ist Methyl und n ist die Zahl 3;
R ist Methyl und n ist die Zahl 2;
R ist Ethyl und n ist die Zahl 3;
R ist Ethyl und n ist die Zahl 2;
R ist n-Propyl und n ist die Zahl 3;
R ist n-Butyl und n ist die Zahl 3;
R ist Phenyl und n ist die Zahl 3.

Erfindungsgemäß verwendete Ausgangsverbindungen der allgemeinen Formel (6) sind beispielsweise: 4-(β-Sulfatoethylsulfonyl)-anilin, 2-Sulfo-4-(β-sulfatoethylsulfonyl)-anilin, 2-Chlor-4-(β-sulfatoethylsulfonyl)-anilin, 2-Brom-4-(β-sulfatoethylsulfonyl)-anilin, 2-Methoxy-4-(β-sulfatoethylsulfonyl)-anilin, 3-(β-Sulfatoethylsulfonyl)-anilin, 2-Methoxy-5-(β-sulfatoethylsulfonyl)-anilin, 2-Sulfo-5-(β-sulfatoethylsulfonyl)-anilin, 2-Chlor-5-(β-sulfatoethylsulfonyl)-anilin, 2-Brom-5-(β-sulfatoethylsulfonyl)-anilin, 2-Sulfo-5-(2′,4′-dichlor-s-triazin-6-yl)-amino-anilin, 2-Sulfo-5-(2′-chlor-4′-amino-s-triazin-6-yl)-amino-anilin, 2-Sulfo-5-(2′-chlor-4′-methoxy-s-triazin-6-yl)-amino-anilin, 2-Sulfo-5-[2′-fluor-4′-(3″-sulfophenyl)-amino-s-triazin-6-yl]-amino-anilin, 2-Sulfo-5- [2′-fluor-4′-(4″-β″-sulfatoethylsulfonyl)-amino-s-triazin-6-yl]-amino-anilin, 2-Sulfo-5-[2′-chlor-4′-(3″-β″-sulfatoethylsulfonyl)-amino-s-triazin-6-yl]-amino-anilin, 1-Amino-3-carbonsäure-[3′-(β′-sulfatoethylsulfonyl)-phenylamid], 6-(β-Sulfatoethylsulfonyl)-2-amino-naphthalin, 1-Sulfo-6-(β-sulfatoethylsulfonyl)-2-amino-naphthalin, 6-Sulfato-8-(β-sulfatoethylsulfonyl)-2-aminonaphthalin, 8-Sulfato-6-(β-sulfatoethylsulfonyl)-2-amino-naphthalin.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) - im nachfolgenden als Verbindung (1) bezeichnet - haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen, indem man die Verbindung (1) in gelöster Form auf das Substrat aufbringt oder sie darin einbringt und sie auf oder in dem Material durch Hitzeeinwirkung und/oder durch Einwirkung eines alkalisch wirkenden Mittels fixiert. Hydroxygruppenhaltige Materialien sind solche natürlichen oder synthetischen Ursprungs, wie beispielsweise Cellulosefasermaterialien oder deren Regeneratprodukte und Polyvinylalkohole, Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen (1) lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 40 und 105 °C, gegebenenfalls bei Temperaturen bis zu 120 °C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken des Materials mit einer Natriumbicarbonat oder ein anderes säurebindendes Mittel und die Verbindung (1) enthaltenden Druckpaste und durch anschließendes Dämpfen bei 100 bis 103 °C, oder zweiphasig, beispielsweise durch Bedrucken mit neutraler oder schwach sauren, die Verbindung (1) enthaltenden Druckpaste und anschließendes Fixieren entweder durch Hindurchführen des bedruckten Materials durch ein heißes elektrolythaltiges alkalisches Bad oder durch Überklotzen mit einer alkalischen, elektrolythaltigen Klotzflotte mit anschließendem Verweilen oder Dämpfen oder Behandlung mit Trockenhitze dieses alkalisch vorbehandelten Materials durchgeführt werden können, erhält man farbstarke Drucke mit gutem Stand der Konturen und einem klaren Weißfond. Der Ausfall ist von wechselnden Fixierbedingungen nur wenig abhängig.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindungen (1) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumhydrogenphosphat, Dinatriumhydrogenphosphat, Natriumtrichloracetat, Wasserglas oder Trinatriumphosphat.

Durch die Behandlung der Verbindungen (1) mit den säurebindenden Mitteln, gegebenenfalls unter Wärmeeinwirkung, werden diese chemisch an die Cellulosefaser gebunden; die so erhaltenen Färbungen zeigen nach der üblichen Nachbehandlung durch Spülen zur Entfernung von nicht fixierten Anteilen der erfindungsgemäßen Farbstoffe der Formel (1) ausgezeichnete Naßechtheiten, zumal sich nicht fixierte Anteile leicht wegen ihr guten Kaltwasserlöslichkeit auswaschen lassen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40° C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98° C durchgeführt. Die Färbungen können aber auch bei Siedetemperatur oder bei Temperaturen bis zu 120° C (unter Druck) ausgeführt werden.

Die mit den Verbindungen (1) hergestellten Färbungen und Drucke zeichnen sich in der Regel durch klare, grünstichig über rotstichig gelbe bis gelbstichig orange Nuancen und hohe Farbstärken aus. Die Färbungen und Drucke besitzen, insbesondere auf Cellulosefasermaterialien, eine gute Lichtechtheit und gute Naßechtheiten, wie beispielsweise gute Wasch-, Walk-, Wasser-, Seewasser-, alkalische und saure Überfärbe- und Schweißechtheiten, desweiteren eine gute Plissierechtheit, Bügelechtheit und Reibechtheit.

Ebenso von Bedeutung ist die erfindungsgemäße Verwendung der Verbindungen (1) auch für das faserreaktive Färben von Wolle. Insbesondere läßt sich auf filzfrei oder filzarm ausgerüstete Wolle (vgl. bspw. H. Rath, Lehrbuch der Textilchemie, Springer-Verlag, 3. Auflage (1972), S.295-299, insbesondere die Ausrüstung nach dem sogenannten Hercosett-Verfahren (S. 298); J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise, indem die faserreaktive Verbindung (1) bevorzugt zunächst aus saurem Färbebad mit einen pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen der Verbindung (1) und der Faser herbeizuführen. Gleichzeitig wird der nicht reaktiv gebundene Farbstoffanteil abgelöst.

Die hier beschriebene Verfahrenweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100° C durchgeführt, jedoch können sie auch in geschlossenen Färbeapparaturen bei Temperaturen bis zu 106° C erfolgen. Da die Wasserlöslichkeit der Verbindungen (1) sehr gut ist, lassen sie sich auch mit Vorteil bei üblichen kontinuierlichen Färbeverfahren einsetzen. Die Farbstärke der erfindungsgemäßen Verbindungen (1) ist sehr hoch. Sie liefern auf den Fasermaterialien, insbesondere beim reaktiven Färben von Wolle, klare grünstich über rotstichig gelbe bis gelbstichig orange Färbungen. Bei Anwendung von Färbetemperaturen von 100 bis 106° C ist eine hohe Baderschöpfung festzustellen.

Bei den mit den erfindungsgemäßen Verbindungen (1) erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit den erfindungsgemäßen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein hohes Naßechtheitsniveau zu erzielen, wobei jedoch gegebenenfalls eine ammoniakalische Nachbehandlung bevorzugt werden kann. Neben der hohen Lichtechtheit dieser Wollfärbungen sind als gute Naßechtheitseigenschaften insbesondere die Schweißechtheiten und die Waschechtheit bei 60° C, auch von Färbungen in hohen Farbtiefen, zu nennen.

Die nachstehenden Beispiele dienen zur Erläuterung der Erfindung. Die Teile sind Gewichtsteile, die

Prozentangaben stellen Gewichtsprozente dar, sofern nicht anders vermerkt. Gewichtsteile beziehen sich zu Volumenteilen wie Kilogramm zu Liter.

Die in den nachstehenden Beispielen formelmäßig beschriebenen Verbindungen sind in Form der freien Säuren angegeben; im allgemeinen werden sie in Form ihrer Natrium-oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die in den Beispielen für die erfindungsgemäßen Azoverbindungen (1) genannten Absorptionsmaxima ($\lambda_{max}$-Werte) im sichtbaren Bereich wurden für deren Alkalisalze aus wäßriger Lösung ermittelt.

**Beispiel A**

88 Teile 1-(γ-Methoxy-n-propyl)-2-hydroxy-3-cyan-4-methyl-pyrid-6-on (s. Beispiel 1 der deutschen Offenlegungsschrift 3 239 436) werden ohne Kühlung bei 25 bis 60° C in 293 Teile 25%ige wäßrige Schwefelsäure eingerührt. Man erhitzt das Reaktionsgemisch auf 80° C, rührt es 2 Stunden bei 80° C, kühlt es auf 25° C ab und gießt es unter Rühren auf eine Mischung aus 100 Teilen Wasser und 540 Teilen Eis, stellt dieses Gemisch mittels etwa 660 Teilen einer 30 bis 33%igen wäßrigen Natronlauge auf einen pH-Wert von 6, filtriert es und trocknet den Rückstand.
Man erhält 78 Teile der Verbindung der Formel

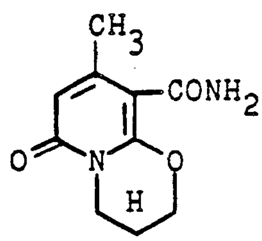

mit der chemischen Bezeichnung 8-Methyl-6-oxo-3,4-dihydro-2H,6H-pyrido[2,1-b][1,3]-oxazin-9-carboxamide als weißes Pulver mit einem Schmelzpunkt von 229° C.

**Beispiel B**

Die Kupplungskomponente mit der chemischen Bezeichnung 6-Carbamoyl-2,3-dihydro-7-methyl-oxazolo[3.2-a]pyrid-5(4H)-on läßt sich gemäß der Verfahrensweise des Beispieles A aus 1-(β-Methoxy-ethyl)-2-hydroxy-3-cyan-4-methyl-pyrid-6-on unter desmethylierendem Ringschluß und gleichzeitiger Hydrolyse der Cyangruppe zur Carbamoylgruppe mittels wäßriger Schwefelsäure herstellen (die 2-Hydroxy-pyridon(6)-Ausgangsverbindung selbst erhält man gemäß der Verfahrensweise des Beispieles 1 der deutschen Offenlegungsschrift 3 239 436, indem man jedoch anstelle des dort verwendeten Cyanessigsäure-(γ-methoxy)-propylamids das Cyanessigsäure-(β-methoxy)-ethylamid einsetzt); sie wird als weißes Pulver mit einem Schmelzpunkt von 238° C erhalten und besitzt die Formel

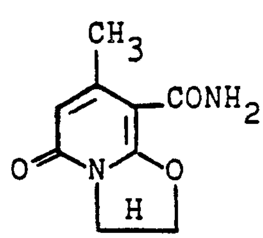

**Beispiel 1**

29,1 Teile 3-(β-Sulfatoethylsulfonyl)-anilin werden in üblicher Weise bei 0 bis 7° C in wäßrige-salzsaurer Lösung (200 Teile Wasser und 27,6 Teile einer 31%igen wäßrigen Salzsäure) durch Einrühren einer wäßrigen, 7 Teile Natriumnitrit enthaltenden Lösung diazotiert. Anschließend wird mit Natriumbicarbonat ein pH-Wert von 6 eingestellt; 20,8 Teile der Pyridonverbindung von Beispiel A werden hinzugegeben, und man führt die Kupplung unter Einhaltung eines pH-Wertes von 6 bis 7 und bei einer Temperatur von 15 bis 20° C während 5 Stunden durch. Die Lösung wird anschließend mit 1 Teil Kieselgur versetzt, filtriert und eingedampft.

Man erhält die erfindungsgemäß Monoazoverbindung als Natriumsalz der Formel

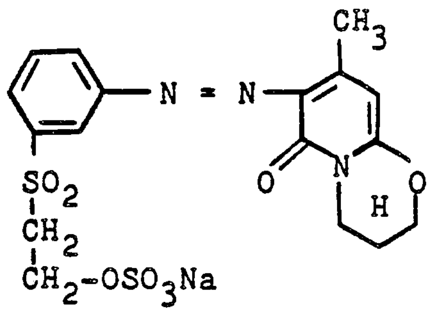

($\lambda_{max}$ = 413 nm)

in Form eines elektrolytsalzhaltigen (Natriumchloridhaltigen) Produktes. Sie besitzt sehr gute faserreaktive Farbstoffeigenschaften und liefert auf den in der Beschreibung genannten Materialien, wie insbesondere Cellulosefasermaterialien, beispielsweise Baumwolle, nach den in der Technik, insbesondere für fasereaktive Farbstoffe, üblichen Applikations- und Fixiermethoden farbstarke, grünstichig gelbe Färbungen und Drucke von guter Lichtechtheit und von guten Naßechtheitseigenschaften, wie insbesondere guten Wasch-, Walk-, Überfärbe-, Chlorbadewasser- und Schweißechtheiten.

**Beispiel 2**

Zur Herstellung einer erfindungsgemäßen Monoazoverbindung verfährt man gemäß der Verfahrensweise des Beispieles 1, setzt jedoch als Diazokomponente anstelle der dort verwendeten Anilinverbindung das 2-Methoxy-5-(β-sulfatoethylsulfonyl)-anilin in einer Menge von 130,2 Teilen ein. Man erhält die erfindungsgemäße Monoazoverbindung der Formel

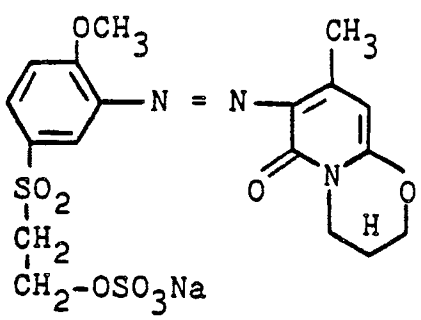

($\lambda_{max}$ = 432 nm)

als elektrolytsalzhaltiges gelbes Pulver. Die erfindungsgemäße Azoverbindung besitzt ebenfalls sehr gute faserreaktive Farbstoffeigenschaften und liefert insbesondere auf Cellulosefasermaterial, wie Baumwolle, nach den für faserreaktive Farbstoffe üblichen Applikations-und Fixiermethoden farbstarke, grünstichig gelbe Färbungen und Drucke von guten Licht- und Naßechtheitseigenschaften, wie guten Wasch-, Walk-,

Überfärbe- und Schweißechtheiten.

**Beispiel 3**

Zur Herstellung einer erfindungsgemäßen Monoazoverbindung verfährt man gemäß der Verfahrensweise des Beispieles 1, verwendet jedoch anstelle der dort eingesetzten Pyridon-Kupplungskomponente die Pyridonverbindung von Beispiel B in einer Menge von 19,4 Teilen. Man erhält die erfindungsgemäße Monoazoverbindung der Formel

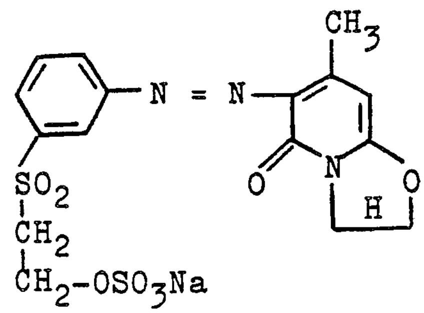

($\lambda_{max}$ = 413 nm)

als elektrolytsalzhaltiges gelbes Pulver. Die erfindungsgemäße Azoverbindung besitzt ebenfalls sehr gute faserreaktive Farbstoffeigenschaften und liefert insbesondere auf Cellulosefasermaterial, wie Baumwolle, nach den für faserreaktive Farbstoffe üblichen Applikations-und Fixiermethoden farbstarke, grünstichig gelbe Färbungen und Drucke von guten Licht- und Naßechtheitseigenschaften, wie guten Wasch-, Walk-, Überfärbe- und Schweißechtheiten.

**Beispiele 4 bis 7**

In den nachfolgenden Tabellenbeispielen sind weitere erfindungsgemäße Monoazoverbindungen der allgemeinen Formel (1) mit Hilfe ihrer Diazo- und Kupplungskomponenten beschrieben. Sie lassen sich in erfindungsgemäßer Weise, beispielsweise nach den obigen Ausführungsbeispielen, mittels der aus dem jeweiligen Tabellenbeispiel ersichtlichen Komponenten, herstellen. Sie besitzen sehr gute faserreaktive Farbstoffeigenschaften und liefern auf den in der Beschreibung genannten Materialien, insbesondere auf Cellulosefasermateralien, nach den für faserreaktive Farbstoffe üblichen Applikations- und Fixiermethoden farbstarke echte Färbungen und Drucke in dem in dem jeweiligen Tabellenbeispiel für Färbungen auf Baumwolle angegebenen Farbton. Die in Klammern befindlichen Zahlenangaben geben das Absorptionsmaximum in nm an.

| Monoazoverbindung der Formel (1) | | | |
|---|---|---|---|
| Bsp. | Diazokomponente | Kupplungskomponente | Farbton |
| 4 | 2-Methoxy-4-($\beta$-sulfatoethylsulfonyl)-anilin | von Beispiel A | gelb (435) |
| 5 | 6-($\beta$-Sulfatoethylsulfonyl)-8-sulfo-2-amino-naphthalin | von Beispiel A | gelb (435) |
| 6 | 2-Sulfo-5-($\beta$-sulfatoethylsulfonyl)-anilin | von Beispiel A | grünstichig gelb (410) |
| 7 | 4-Chlor-3-($\beta$-sulfatoethylsulfonyl)-anilin | von Beispiel A | grünstichig gelb (416) |

**Anwendungsbeispiel 1**

20 Teile der erfindungsgemäßen Monoazoverbindung von Beispiel 1 werden zusammen mit 50 Teilen Harnstoff in 300 Teilen Wasser gelöst. Die Lösung wird unterhalb von 40 °C in 400 Teile einer neutralen,

wäßrigen 4%igen Alginatverdickung eingerührt. Man gibt 10 Teile Natriumcarbonat hinzu und füllt das Ganze mit der 4%igen wäßrigen Alginatverdickung auf eine Gesamtmenge von 1000 Teilen auf. Man rührt gut durch und bedruckt mit der so hergestellten Druckpaste ein Baumwollgewebe, das nach dem Trocknen bei 60°C in einem handelsüblichen Dämpfaggregat 5 Minuten lang mit Sattdampf von 100 bis 103°C behandelt wird. Der so hergestellte Druck wird anschließend durch Spülen mit kaltem und heißem Wasser, durch Waschen mit einem neutralen Waschmittel und nochmaliges Spülen mit Wasser fertiggestellt. Nach dem Trocknen der Ware erhält man einen farbstarken, grünstichig gelben Druck mit den in Beispiel 1 genannten guten Echtheiten.

**Anwendungsbeispiel2**

Ein Gewebe aus mercerisierter Baumwolle wird mit einer wäßrigen Färbeflotte von 20°C, die im Liter 20 g der erfindungsgemäßen Azoverbindung von Beispiel 1 sowie 18 g einer 33 %igen Natronlauge enthält, mit einer Flottenaufnahme von 70 %, bezogen auf das Warengewicht, geklotzt. Das geklotzte Gewebe wird auf eine Docke gewickelt, in eine Folie eingeschlagen und 8 Stunden bei Raumtemperatur liegen gelassen. Anschließend wird es durch Spülen mit kaltem Wasser, durch Behandeln mit einem wenig Essigsäure enthaltenden wäßrigen Bad und durch nochmaliges Spülen in kaltem und heißem Wasser fertiggestellt. Nach dem Trocknen erhält man eine farbstarke, grünstichig gelbe Färbung mit den im Beispiel 1 genannten guten Echtheiten.

**Anwendungsbeispiel 3**

100 Teile eines Gewebes aus mercerisierter Baumwolle werden 10 Minuten lang bei 60°C in 3000 Volumenteilen eines wäßrigen Färbebades behandelt, das 5 Teile der erfindungsgemäßen Azoverbindung von Beispiel 1 sowie 150 Teile wasserfreies Natriumsulfat enthält. Nach dieser 10-minütigen Behandlung werden 15 Teile wasserfreies Natriumcarbonat und 4 Teile einer 33 %igen Natronlauge zugesetzt und die Färbung wird 60 Minuten bei 60°C weitergeführt. Anschließend wird das gefärbte Gewebe in üblicher Weise, wie beispielsweise im Anwendungsbeispiel 2, fertiggestellt. Man erhält eine farbstarke, grünstichig gelbe Färbung mit den im Beispiel 1 genannten guten Echtheiten.

**Anwendungsbeispiel 4**

100 Teile eines Wollgewebes werden in ein 40°C warmes wäßriges Färbebad eingebracht, das aus 3000 Teilen Wasser, 2 Teilen der im Beispiel 1 beschriebenen erfindungsgemäßen Monoazoverbindung, 0,15 Teilen eines Anlagerungsproduktes von 12 Mol Ethylenoxid an 1 Mol Stearylamin, 2 Teilen Ammoniumacetat und 2 Teilen 60%iger wäßriger Essigsäure besteht. Die Färbetemperatur wird innerhalb von 30 Minuten auf Kochtemperatur erhöht und die Färbung anschließend 60 Minuten lang bei 100°C weitergeführt. Nach dem üblichen Auswaschen und Fertigstellen der erhaltenen Wollfärbung zeigt dieses Wollgewebe einen farbstarken, grünstichig gelben Farbton von sehr guter Lichtechtheit und von sehr guten Naßechtheiten.

**Anwendungsbeispiel 5**

Man verfährt in der im Anwendungsbeispiel 4 angegebenen Färbeweise, ersetzt jedoch das Wollgewebe durch 100 Teile eines Gewebes aus einer ε-Polycaprolactam-Faser. Man erhält ebenfalls eine farbstarke, grünstichig gelbe Färbung von guten Gebrauchsechtheiten.

Gemäß den obigen Anwendungsbeispielen lassen sich auch die anderen, hier in den Ausführungsbeispielen und Tabellenbeispielen beschriebenen Monoazoverbindung in die Färbe- und Druckverfahren einsetzen und man erhält mit ihnen ebenfalls sehr farbstarke Färbungen und Drucke von guten Licht- und Naßechtheitseigenschaften in den Farbtönen, die für das jeweilige Ausführungs- oder Tabellenbeispiel angegeben sind.

## Ansprüche

1. Monoazoverbindung entsprechend der allgemeinen Formel (1)

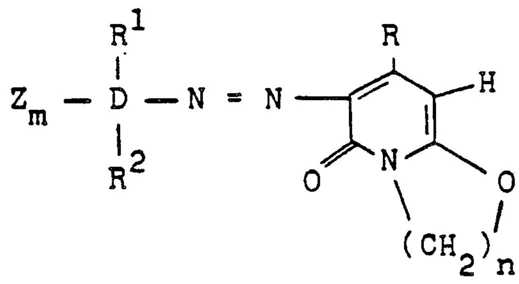

(1)

in welcher bedeuten:
D ist ein Benzol- oder ein Naphthalinring der ein heterocyclischer Rest;
$R^1$ und $R^2$ sind, unabhängig voneinander, jedes Wasserstoff, Alkyl von 1 bis 4-Atomen, Alkoxy von 1 bis 4 C-Atomen, Halogen, Carboxy oder Sulfo;
Z ist eine faserreaktive Gruppierung, die an D direkt oder über ein Brückenglied an D gebunden ist;
m steht für die Zahl 1 oder 2, bevorzugt 1;
R ist Alkyl von 1 bis 4 C-Atomen, das substituiert sein kann, wie beispielsweise durch Halogen, wie Brom und insbesondere Chlor, Hydroxy, Cyano, Sulfo, Carboxy, Sulfato oder Phosphato, oder ist Phenyl, das substituiert sein kann, wie beispielsweise durch 1 oder 2 Substituenten aus der Gruppe Methyl, Ethyl, Methoxy, Ethoxy, Chlor, Sulfo und Carboxy, oder ist Carboxy, Carbamoyl oder Carbalkoxy von 2 bis 5 C-Atomen, bevorzugt jedoch Alkyl von 1 bis 4-Atomen;
n steht für die Zahl 2 oder 3, bevorzugt 3.

2. Verbindung nach Anspruch 1, dadurch gekennzeichnet, daß R die Methylgruppe ist.

3. Verbindung nach Anspruch 1, dadurch gekennzeichnet, daß R die Methylgruppe ist, n die Zahl 3 bedeutet, m für die Zahl 1 steht und Z einen Rest der allgemeinen Formel $X\text{-}SO_2\text{-}$ bedeutet, in welcher X die Vinylgruppe ist oder eine Ethylgruppe bedeutet, die in β-Stellung durch einen alkalisch eliminierbaren Substituenten substituiert ist.

4. Verbindung nach Anspruch 1, dadurch gekennzeichnet, daß m für die Zahl 1 steht und Z einen Rest der allgemeinen Formel $X\text{-}SO_2\text{-}$ bedeutet, in welcher X die Vinylgruppe ist oder für eine Ethylgruppe steht, die in β-Stellung durch einen alkalisch eliminierbaren Substituenten substituiert ist.

5. Verbindung nach Anspruch 1, dadurch gekennzeichnet, daß D ein Naphthalinring ist, an den die Azogruppe in 2-Stellung gebunden ist, $R^1$ und $R^2$ die in Anspruch 1 genannten Bedeutungen haben, m für die Zahl 1 steht, Z eine Gruppe der Formel $X\text{-}SO_2\text{-}$ mit X gleich der Vinylgruppe oder einer Ethylgruppe, die in β-Stellung durch einen alkalisch eliminierbaren Substituenten substituiert ist, bedeutet, R die Methylgruppe ist und n für die Zahl 3 steht.

6. Verbindung nach Anspruch 5, dadurch gekennzeichnet, daß $R^1$ ein Wasserstoffatom bedeutet und $R^2$ ein Wasserstoffatom oder eine Sulfogruppe ist.

7. Verbindung nach Anspruch 1, dadurch gekennzeichnet, daß D ein Benzolring ist, $R^1$ und $R^2$ die in Anspruch 1 genannten Bedeutungen haben, m für die Zahl 1 steht, Z eine Gruppe der Formel $X\text{-}SO_2\text{-}$ mit X gleich der Vinylgruppe oder einer Ethylgruppe, die in β-Stellung durch einen alkalisch eliminierbaren Substituenten substituiert ist, bedeutet, R die Methylgruppe ist und n für die Zahl 3 steht.

8. Verbindung nach mindestens einem der Ansprüche 3 bis 7, dadurch gekennzeichnet, daß X die Vinylgruppe oder die β-Thiosulfatoethyl-, β-Phosphatoethyl-, β-Chlorethyl-oder β-Sulfatoethyl-Gruppe ist.

9. Verbindung nach mindestens einem der Ansprüche 3 bis 7, dadurch gekennzeichnet, daß X die β-Sulfatoethyl-Gruppe bedeutet.

10. Verfahren zur Herstellung einer Verbindung der in Anspruch 1 genannten und definierten allgemeinen Formel (1), dadurch gekennzeichnet, daß man die Diazoniumverbindung einer Aminoverbindung der allgemeinen Formel (6)

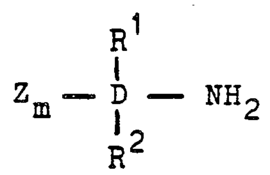

(6)

in welcher Z, m, D, $R^1$ und $R^2$ die in Anspruch 1 genannten Bedeutungen haben, mit einer Verbindung der allgemeinen Formel (7)

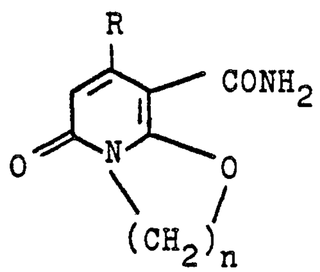

(7)

in welcher R und n die in Anspruch 1 genannten Bedeutungen haben, unter gleichzeitigem Austritt der Carbamoylgruppe kuppelt.

11.Verfahren zur Herstellung einer Verbindung der in Anspruch 1 genannten und definierten allgemeinen Formel (1), in welcher jedoch Z eine Gruppe der Formel -N(R*)- besitzt, in welcher R* ein Wasserstoffatomen oder eine Alkylgruppe von 1 bis 4 C-Atomen bedeutet, und über diese Gruppe -N(R*)- an D gebunden ist, dadurch gekennzeichnet, daß man eine Amino-Azoverbindung der allgemeinen Formel (8)

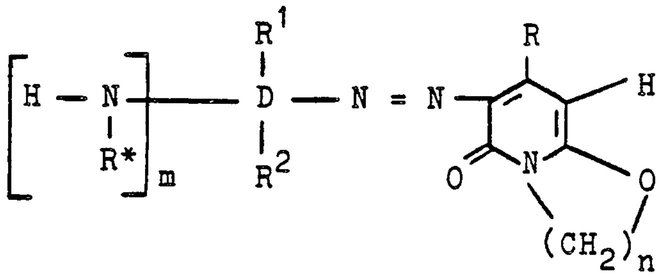

(8)

in welcher D, $R^1$, $R^2$, R, R*, m und n die obengenannten bzw. in Anspruch 1 genannten Bedeutungen haben, mit einer Verbindung der allgemeinen Formel (9)

$Z'-Y^1$ (9)

in welcher Z' ein von der Gruppierung -N(R*)- freier Rest Z der in Anspruch 1 genannten Bedeutung ist und $Y^1$ für einen als Anion abspaltbaren Substituenten, bevorzugt ein Halogenatom, steht, in äquivalenter Menge umsetzt.

12. Verfahren nach Anspruch 11, dadurch gekennzeichnet, daß Z ein Rest der allgemeinen Formel (3)

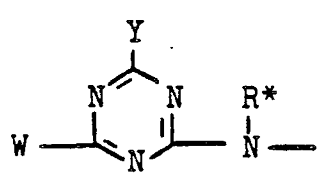

(3)

ist, in welcher

R* ein Wasserstoffatom oder eine Alkylgruppe von 1 bis 4 C-Atomen ist,

Y für ein Fluor- oder Chloratom steht und

W ein Fluor- oder Chloratom ist oder einen N-Nicotinsäureamid- oder N-Nicotinsäure-Rest oder eine Aminogruppe der allgemeinen Formel (4)

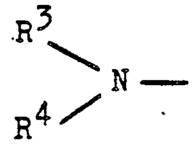

(4)

bedeutet, in welcher

$R^3$ ein Wasserstoffatom oder eine Alkylgruppe von 1 bis 4 C-Atomen ist, die substituiert sein kann, wie beispielsweise durch 1 oder 2 Substituenten aus der Gruppe Sulfo, Carboxy, Phosphato, Sulfato, Hydroxy, Cyano, Vinylsulfonyl, β-Sulfatoethylsulfonyl, β-Chlorethylsulfonyl oder gegebenenfalls substituiertes Aryl, oder

$R^3$ ein cycloaliphatischer Rest ist und

$R^4$ ein Wasserstoffatom oder eine Alkylgruppe von 1 bis 4 C-Atomen ist, die substituiert sein kann, wie beispielsweise durch 1 oder 2 Substituenten aus der Gruppe Sulfo, Carboxy, Phosphato, Sulfato, Hydroxy, Cyano, Vinylsulfonyl, β-Sulfatoethylsulfonyl, β-Chlorethylsulfonyl oder gegebenenfalls substituiertes Aryl, oder

$R^4$ ein gegebenenfalls substituierter Arylrest ist, wie ein gegebenenfalls durch 1, 2 oder 3, bevorzugt 1 oder 2, Substituenten aus der Gruppe Sulfo, Carboxy, Chlor, Brom, Methyl, Ethyl, Methoxy, Ethoxy und eine Gruppe der Formel $-SO_2-X$ mit X einer der obengenannten Bedeutungen substituiertes Phenyl oder Naphthyl, oder

$R^3$ und $R^4$ zusammen mit dem Stickstoffatom den Rest eines 5- oder 6-gliedrigen heterocyclischen Restes bilden, wie beispielsweise den Piperidino-, Piperazino- oder Morpholino-Rest,

dadurch gekennzeichnet, daß man die Umsetzung mit einer Verbindung entsprechend der allgemeinen Formel (9) durchführt, in welcher $Z'$ einen Rest der allgemeinen Formel (11)

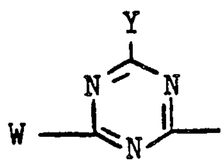

(11)

mit W und Y der obengenannten Bedeutung ist und $Y^1$ die Bedeutung von Y im Rest der Formel (11) besitzt, oder daß man zur Herstellung einer Verbindung der allgemeinen Formel (1) mit Z einem Rest der allgemeinen Formel (3), in welcher W eine Gruppe der allgemeinen Formel $R^4R^3N$- mit $R^4$ und $R^3$ der obengenannten Bedeutung steht, eine Verbindung der allgemeinen Formel (12)

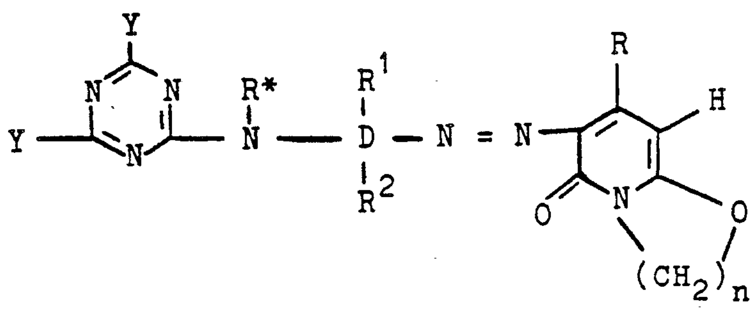

(12)

in welcher $R^*$, $R^1$, $R^2$, R, D und n sowie die beiden Y die obengenannten Bedeutungen haben, mit einer Aminoverbindung der allgemeinen Formel $HNR^3R^4$ mit $R^3$ und $R^4$ der obengenannten Bedeutung umsetzt.

13. Verwendung einer Verbindung gemäß der in Anspruch 1 genannten und definierten allgemeinen Formel (1) oder einer gemäß einem der Ansprüche 10 bis 12 hergestellten Monoazoverbindung der Formel (1) als Farbstoff.

14. Verwendung nach Anspruch 13 zum Färben oder Bedrucken von hydroxy- und/oder carbonamidgruppenhaltigem Material, vorzugsweise Fasermaterial.

15. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme oder mittels einer säurebindenden Verbindung fixiert, dadurch gekennzeichnet, daß man als Farbstoff eine Verbindung entsprechend der gemäß Anspruch 1 genannten und definierten allgemeinen Formel (1) einsetzt.

Patentansprüche für folgenden Vertragstaat: ES

1. Verfahren zur Herstellung einer Monoazoverbindung entsprechend der allgemeinen Formel (1)

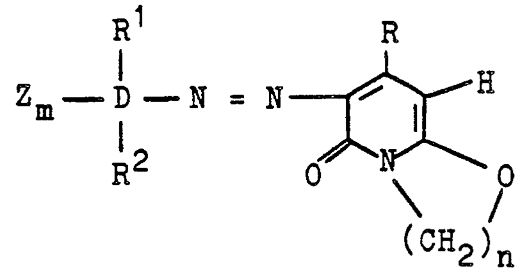
(1)

in welcher bedeuten:
D ist ein Benzol- oder ein Naphthalinring oder ein heterocyclischer Rest;
$R^1$ und $R^2$ sind, unabhängig voneinander, jedes Wasserstoff, Alkyl von 1 bis 4 C-Atomen, Alkoxy von 1 bis 4 C-Atomen, Halogen, Carboxy oder Sulfo;
Z ist eine faserreaktive Gruppierung, die an D direkt oder über ein Brückenglied an D gebunden ist;
m steht für die Zahl 1 oder 2, bevorzugt 1;
R ist Alkyl von 1 bis 4 C-Atomen, das substituiert sein kann, wie beispielsweise durch Halogen, wie Brom und insbesondere Chlor, Hydroxy, Cyano, Sulfo, Carboxy, Sulfato oder Phosphato, oder ist Phenyl, das substituiert sein kann, wie beispielsweise durch 1 oder 2 Substituenten aus der Gruppe Methyl, Ethyl, Methoxy, Ethoxy, Chlor, Sulfo und Carboxy, oder ist Carboxy, Carbamoyl oder Carbalkoxy von 2 bis 5 C-Atomen, bevorzugt jedoch Alkyl von 1 bis 4 C-Atomen;
n steht für die Zahl 2 oder 3, bevorzugt 3,
dadurch gekennzeichnet, daß man die Diazoniumverbindung einer Aminoverbindung der allgemeinen Formel (6)

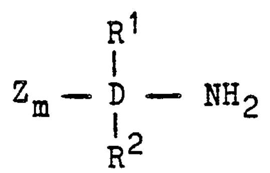
(6)

in welcher Z, m, D, $R^1$ und $R^2$ die oben genannten Bedeutungen haben, mit einer Verbindung der allgemeinen Formel (7)

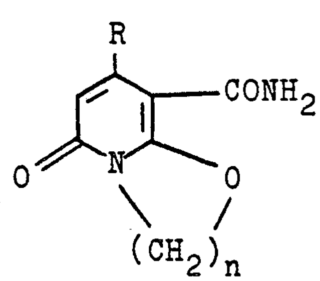
(7)

in welcher R und n die obengenannten Bedeutungen haben, unter gleichzeitigem Austritt der Carbamoylgruppe kuppelt,
oder daß man im Falle von Z mit einer an D gebundenen Gruppe der Formel -N(R*)- mit R* gleich Wasserstoff oder Alkyl von 1 bis 4 C-Atomen eine Amino-Azoverbindung der allgemeinen Formel (8)

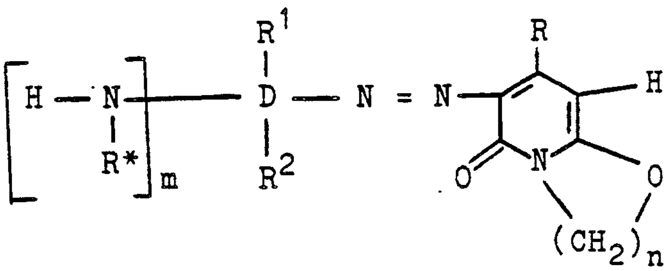
(8)

in welcher D, $R^1$, $R^2$, R, R*, m und n die obengenannten Bedeutungen haben, mit einer Verbindung der allgemeinen Formel (9)
$Z'-Y^1$ (9)
in welcher Z′ ein von der Gruppierung -N(R*)- freier Rest Z der obengenannten Bedeutung ist und $Y^1$ für einen als Anion abspaltbaren Substituenten, bevorzugt ein Halogenatom, steht, in äquivalenter Menge umsetzt, oder daß man im Falle von Z gleich einem Rest der allgemeinen Formel (3)

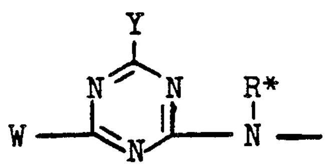
(3)

in welcher
R* ein Wasserstoffatomen oder eine Alkylgruppe von 1 bis 4 C-Atomen ist,
Y für ein Fluor- oder Chloratom steht und
W ein Fluor- oder Chloratom ist oder einen N-Nicotinsäureamid- oder N-Nicotinsäure-Rest oder eine Aminogruppe der allgemeinen Formel (4)

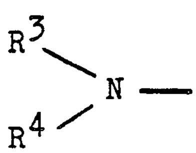
(4)

bedeutet, in welcher
$R^3$ ein Wasserstoffatomen oder eine Alkylgruppe von 1 bis 4 C-Atomen ist, die substituiert sein kann, wie beispielsweise durch 1 oder 2 Substituenten aus der Gruppe Sulfo, Carboxy, Phosphato, Sulfato, Hydroxy, Cyano, Vinylsulfonyl, β-Sulfatoethylsulfonyl, β-Chlorethylsulfonyl oder gegebenenfalls substituiertes Aryl, oder
$R^3$ ein cycloaliphatischer Rest ist und $R^4$ ein Wasserstoffatom oder eine Alkylgruppe von 1 bis 4 C-Atomen ist, die substituiert sein kann, wie beispielsweise durch 1 oder 2 Substituenten aus der Gruppe Sulfo, Carboxy, Phosphato, Sulfato, Hydroxy, Cyano, Vinylsulfonyl, β-Sulfatoethylsulfonyl, β-Chlorethylsulfonyl oder gegebenenfalls substituiertes Aryl, oder
$R^4$ ein gegebenenfalls substituierter Arylrest ist, wie ein gegebenenfalls durch 1, 2 oder 3, bevorzugt 1 oder 2, Substituenten aus der Gruppe Sulfo, Carboxy, Chlor, Brom, Methyl, Ethyl, Methoxy, Ethoxy und eine Gruppe der Formel $-SO_2-X$ mit X einer der obengenannten Bedeutungen substituiertes Phenyl oder Naphthyl, oder
$R^3$ und $R^4$ zusammen mit dem Stickstoffatom den Rest eines 5- oder 6-gliedrigen heterocyclischen Restes bilden, wie beispielsweise den Piperidino-, Piperazino- oder Morpholino-Rest,
die Verbindung der Formel (8) mit einer Verbindung entsprechend der allgemeinen Formel (9) umsetzt, in welcher Z′ einen Rest der allgemeinen Formel (11)

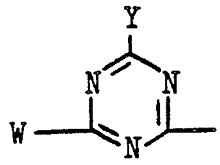

(11)

mit W und Y der obengenannten Bedeutung ist und $Y^1$ die Bedeutung von Y im Rest der Formel (11) besitzt, umsetzt, oder daß man zur Herstellung einer Verbindung der allgemeinen Formel (1) mit Z einem Rest der allgemeinen Formel (3), in welcher W eine Gruppe der allgemeinen Formel $R^4R^3N$- mit $R^4$ und $R^3$ der obengenannten Bedeutung steht, eine Verbindung der allgemeinen Formel (12)

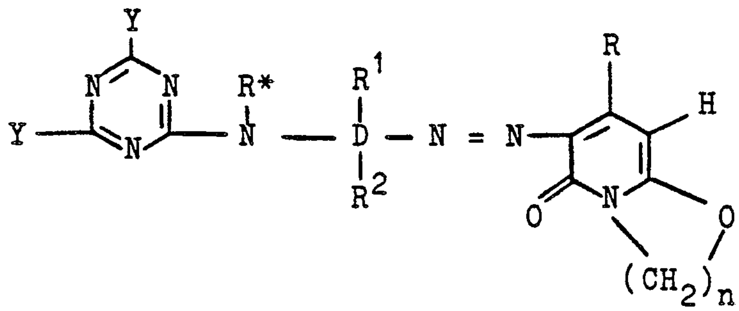

(12)

in welcher R*, $R^1$, $R^2$, R, D und n sowie die beiden Y die obengenannten Bedeutungen haben, mit einer Aminoverbindung der allgemeinen Formel $HNR^3R^4$ mit $R^3$ und $R^4$ der obengenannten Bedeutung umsetzt.

2. Verfahren nach Anspruch 1, dadurch gekennzeichnet, daß R die Methylgruppe ist.

3. Verfahren nach Anspruch 1, dadurch gekennzeichnet, daß R die Methylgruppe ist, n die Zahl 3 bedeutet, m für die Zahl 1 steht und Z einen Rest der allgemeinen Formel $X\text{-}SO_2$- bedeutet, in welcher X die Vinylgruppe ist oder eine Ethylgruppe bedeutet, die in β-Stellung durch einen alkalisch eliminierbaren Substituenten substituiert ist.

4. Verfahren nach Anspruch 1, dadurch gekennzeichnet, daß m für die Zahl 1 steht und Z einen Rest der allgemeinen Formel $X\text{-}SO_2$- bedeutet, in welcher X die Vinylgruppe ist oder für eine Ethylgruppe steht, die in β-Stellung durch einen alkalisch eliminierbaren Substituenten substituiert ist.

5. Verfahren nach Anspruch 1, dadurch gekennzeichnet, daß D ein Naphthalinring ist, an den die Azogruppe in 2-Stellung gebunden ist, $R^1$ und $R^2$ die in Anspruch 1 genannten Bedeutungen haben, m für die Zahl 1 steht, Z eine Gruppe der Formel $X\text{-}SO_2$- mit X gleich der Vinylgruppe oder einer Ethylgruppe, die in β-Stellung durch einen alkalisch eliminierbaren Substituenten substituiert ist, bedeutet, R die Methylgruppe ist und n für die Zahl 3 steht.

6. Verfahren nach Anspruch 5, dadurch gekennzeichnet, daß $R^1$ ein Wasserstoffatom bedeutet und $R^2$ ein Wasserstoffatom oder eine Sulfogruppe ist.

7. Verfahren nach Anspruch 1, dadurch gekennzeichnet, daß D ein Benzolring ist, $R^1$ und $R^2$ die in Anspruch 1 genannten Bedeutungen haben, m für die Zahl 1 steht, Z eine Gruppe der Formel $X\text{-}SO_2$- mit X gleich der Vinylgruppe oder einer Ethylgruppe, die in β-Stellung durch einen alkalisch eliminierbaren Substituenten substituiert ist, bedeutet, R die Methylgruppe ist und n für die Zahl 3 steht.

8. Verfahren nach mindestens einem der Ansprüche 3 bis 7, dadurch gekennzeichnet, daß X die Vinylgruppe oder die β-Thiosulfatoethyl-, β-Phosphatoethyl-, β-Chlorethyl-oder β-Sulfatoethyl-Gruppe ist.

9. Verfahren nach mindestens einem der Ansprüche 3 bis 7, dadurch gekennzeichnet, daß X die β-Sulfatoethyl-Gruppe bedeutet.

10. Verwendung einer Verbindung gemäß der in Anspruch 1 genannten und definierten allgemeinen Formel (1) oder einer gemäß einem der Ansprüche 1 bis 9 hergestellten Monoazoverbindung der Formel (1) als Farbstoff.

11. Verwendung nach Anspruch 10 zum Färben oder Bedrucken von hydroxy- und/oder carbonamidgruppenhaltigem Material, vorzugsweise Fasermaterial.

12. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und ihn mittels Wärme oder mittels einer säurebindenden Verbindung fixiert, dadurch gekennzeichnet, daß man als Farbstoff eine Verbindung entsprechend der in Anspruch 1 genannten und definierten allgemeinen

Formel (1) oder eine gemäß einem der Ansprüche 1 bis 9 hergestellten Monoazoverbindung der Formel (1) einsetzt.